# EUROPEAN PATENT APPLICATION

(11) **EP 4 811 259 A1**
(43) Date of publication of application: **23.09.2026**
(21) Application number: 25196568.7
(22) Date of filing: 19.08.2025
(51) Int. Cl.: G06Q 30/0283

(54) **INFORMATION PROCESSING SYSTEM, PROGRAM, AND INFORMATION PROCESSING METHOD**

(30) Priority: 18.03.2025 JP 2025043471
(71) Applicant: Fujifilm Business Innovation Corp., Tokyo 107-0052 (JP)
(72) Inventor: KONO, Takeru, Tokyo (JP); SHIMOYAMA, Seiji, Tokyo (JP); BUJO, Makiko, Tokyo (JP); OZAWA, Nemu, Tokyo (JP)
(74) Representative: Meissner Bolte Partnerschaft mbB

(57) **Abstract**

An information processing system includes a processor configured to identify a person in an image upon acquisition of the image; and calculate a profit share of the identified person upon acquisition of information concerning sales of the image.

## Description

### Background

### (i) Technical Field

The present disclosure relates to an information processing system, a program, and an information processing method.

### (ii) Related Art

Japanese Unexamined Patent Application Publication No. 2023-021054 discloses a photo sorting method for categorizing photos of people which a user wants into individual photos and group photos.

### Summary

In the world of entertainment, the world of sports, and the like, images such as photos and moving images taken in live venues, sports venues, and the like are sold in some cases, and a portion of sales proceeds is distributed to organizations such as entertainment agencies, baseball associations, football associations, and the like or persons in the images who belong to the organizations. Manual effort and time are needed to identify, from images such as photos and moving images, persons in the images and calculate a profit share.

Accordingly, it is an object of the present disclosure to provide an information processing system, a program, and an information processing method that may calculate a profit share allocated to a person in an image without human intervention.

According to a first aspect of the present disclosure, there is provided an information processing system including a processor configured to identify a person in an image upon acquisition of the image; and calculate a profit share of the identified person upon acquisition of information concerning sales of the image.

According to a second aspect of the present disclosure, the information processing system according to the first aspect is configured such that the processor is configured to calculate a profit share of an organization related to the identified person in a case where a number of identified persons is larger than a predetermined number.

According to a third aspect of the present disclosure, the information processing system according to the second aspect is configured such that the predetermined number is settable for each organization related to the identified person.

According to a fourth aspect of the present disclosure, the information processing system according to the second aspect is configured such that the processor is configured to calculate a profit share of each identified person in accordance with a rule of the organization related to the person in a case where the number of identified persons is more than one and is equal to or less than the predetermined number.

According to a fifth aspect of the present disclosure, the information processing system according to the fourth aspect is configured such that the processor is configured to calculate a profit share of each identified person in accordance with a position of the identified person in the image or a proportion of a person image of the identified person in the image.

According to a sixth aspect of the present disclosure, the information processing system according to the fourth aspect is configured such that the processor is configured not to allocate a profit share to the image in a case where the person in the image is not identified.

According to a seventh aspect of the present disclosure, the information processing system according to any one of the first to sixth aspects is configured such that the processor is configured to, in a case where the person in the image is not identified, acquire, from an outside, event information on an event where the image was taken and identify the person in the image on the basis of the acquired event information.

According to an eighth aspect of the present disclosure, the information processing system according to any one of the first to seventh aspects is configured such that the processor is configured to acquire, from an outside, event information on an event where the image was taken and set, for each person in the image, whether or not to allocate a profit share on the basis of the image and the event information.

According to a ninth aspect of the present disclosure, a program causes a computer to execute a process including acquiring an image; identifying a person in the image; acquiring information concerning sales of the image; and calculating a profit share of the identified person.

According to a tenth aspect of the present disclosure, there is provided an information processing method including: acquiring an image; identifying a person in the image; acquiring information concerning sales of the image; and calculating a profit share of the identified person.

According to the first aspect of the present disclosure, the profit share of the person in the image can be calculated without human intervention.

According to the second aspect of the present disclosure, the profit share can be calculated in accordance with the rule of the related organization.

According to the third aspect of the present disclosure, the profit share can be calculated in accordance with the rule of the related organization.

According to the fourth aspect of the present disclosure, the profit share can be calculated in accordance with the rule of the related organization.

According to the fifth aspect of the present disclosure, a large profit share can be allocated to a person who is believed to have contributed to sales of the image.

According to the sixth aspect of the present disclosure, no profit share is allocated to the image in which the person is not identified.

According to the seventh aspect of the present disclosure, the person in the image can be identified even in a case where the person is not identified by face authentication.

According to the eighth aspect of the present disclosure, setting can be performed in accordance with a situation of the person in the image.

According to the ninth aspect of the present disclosure, the profit share of the person in the image can be calculated without human intervention.

According to the tenth aspect of the present disclosure, the profit share of the person in the image can be calculated without human intervention.

### Brief Description of the Drawings

An exemplary embodiment of the present disclosure will be described in detail based on the following figures, wherein:
Fig. 1 illustrates a system configuration of a profit share calculation system according to an exemplary embodiment of the present disclosure;
Fig. 2 is a block diagram illustrating a hardware configuration of a profit share calculation server according to the exemplary embodiment of the present disclosure;
Fig. 3 is a block diagram illustrating a functional configuration of the profit share calculation server according to the exemplary embodiment of the present disclosure;
Fig. 4 illustrates a first example of a photo image for which a profit share is calculated;
Fig. 5 illustrates an example of a case where information on a profit share transmitted from the profit share calculation server is displayed on a screen of a terminal apparatus;
Fig. 6 illustrates a second example of a photo image for which a profit share is calculated;
Fig. 7 illustrates a third example of a photo image for which a profit share is calculated;
   and
Fig. 8 illustrates a fourth example of a photo image for which a profit share is calculated.

### Detailed Description

Next, an exemplary embodiment of the present disclosure is described in detail with reference to the drawings.

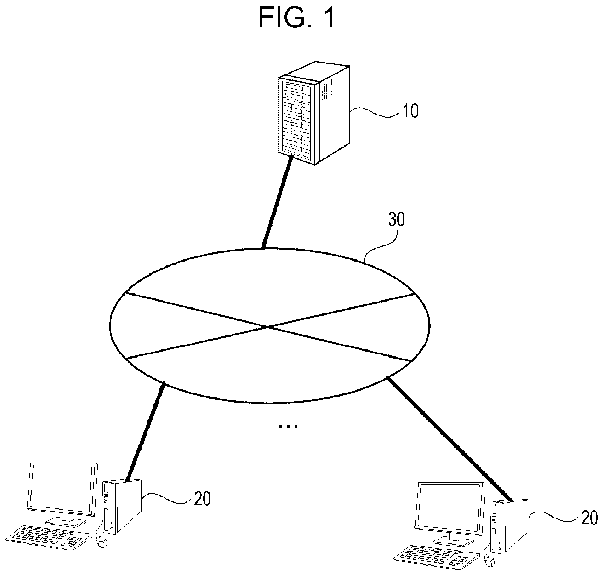

Fig. 1 illustrates a system configuration of a profit share calculation system according to the exemplary embodiment of the present disclosure.

In the world of entertainment, the world of sports, and the like, images such as photos and moving images taken in live venues, sports venues, and the like are sold in some cases, and a portion of sales proceeds of the images is distributed to related organizations such as entertainment agencies, baseball associations, football associations, and the like or persons in the images who belong to the related organizations. The profit share calculation system according to the present exemplary embodiment is a system that calculates a profit share from sales of the images.

As illustrated in Fig. 1, an information processing system according to the exemplary embodiment of the present disclosure includes a profit share calculation server 10 and plural terminal apparatuses 20 that are connected to one another over an Internet 30.

The profit share calculation server 10 is an information processing apparatus for calculating a profit share from sales of an image such as a photo image uploaded from each of the terminal apparatuses 20. When an image such as a photo image is uploaded from the terminal apparatus 20 to the profit share calculation server 10, a profit share of each person in the image from sales of the image is calculated. Then, information on the calculated profit share is supplied from the profit share calculation server 10 to the terminal apparatus 20.

Note that the profit share calculation system according to the present exemplary embodiment is a system for calculating a profit share from sales of images including moving images and still images taken in various events. Note that the following discusses a case where a profit share from sales of a photo image taken in a sport event is calculated.

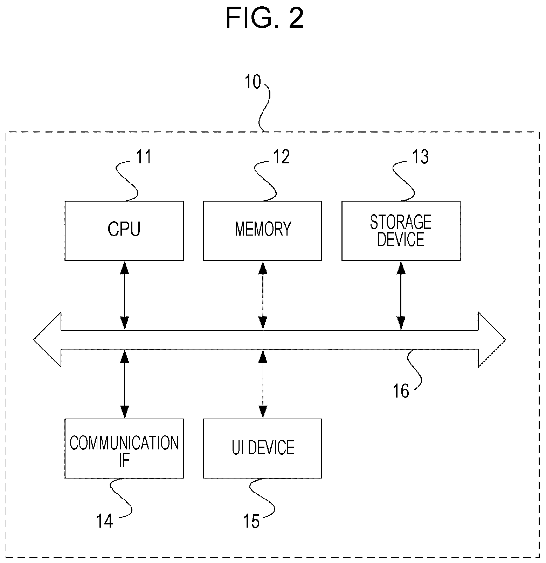

Next, a hardware configuration of the profit share calculation server 10 in the profit share calculation system according to the present exemplary embodiment is illustrated in Fig. 2.

As illustrated in Fig. 2, the profit share calculation server 10 includes a CPU 11, a memory 12, a storage device 13 such as a hard disk drive, a communication interface (abbreviated as IF) 14 that transmits and receives data to and from an external apparatus or the like over the Internet 30, and a user interface (abbreviated as UI) device 15 including a touch panel or a liquid crystal display and a keyboard. These constituent elements are connected to each other over a control bus 16.

The CPU 11 is a processor that controls operation of the profit share calculation server 10 by performing predetermined processing on the basis of a control program stored in the memory 12 or the storage device 13. Note that although the CPU 11 reads out and executes the control program stored in the memory 12 or the storage device 13 in the present exemplary embodiment, this is not restrictive. This control program may be provided in a form of a computer-readable recording medium. For example, this program may be provided in a form of an optical disc such as a compact disc (CD)-ROM or a digital versatile disc (DVD)-ROM or in a form of a semiconductor memory such as a universal serial bus (USB) memory or a memory card. Alternatively, the control program may be acquired from an external apparatus over a communication line connected to the communication interface 14. Furthermore, for example, this control program may be provided as independent application software or may be incorporated into software of each device of the profit share calculation server 10 as a function of the profit share calculation server 10.

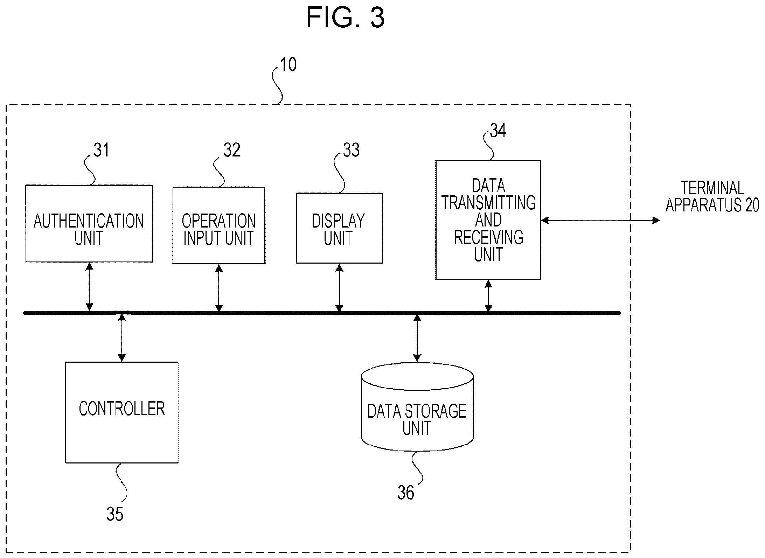

Fig. 3 is a block diagram illustrating a functional configuration of the profit share calculation server 10 realized by execution of the control program.

As illustrated in Fig. 3, the profit share calculation server 10 according to the present exemplary embodiment includes an authentication unit 31, an operation input unit 32, a display unit 33, a data transmitting and receiving unit 34, a controller 35, and a data storage unit 36.

The data transmitting and receiving unit 34 transmits and receives data to and from an external apparatus such as the terminal apparatus 20. The controller 35 receives a photo image for which a profit share is to be calculated from the terminal apparatus 20 via the data transmitting and receiving unit 34. Furthermore, the controller 35 transmits information on a calculated profit share to the terminal apparatus 20 via the data transmitting and receiving unit 34. The data storage unit 37 stores therein various kinds of data such as photo image data received by the data transmitting and receiving unit 34 and calculated profit share data.

The authentication unit 31 authenticates users who attempt access by using the plural terminal apparatuses 20. The display unit 33 is controlled by the controller 35 and displays various kinds of information for a user who operates the profit share calculation server 10. The operation input unit 32 receives information on various kinds of operation performed by a user.

Then, upon acquisition of a photo image from the terminal apparatus 20, the controller 35 identifies a person in the acquired photo image. Furthermore, upon acquisition of information concerning sales of the photo image, the controller 35 calculates a profit share of the identified person.

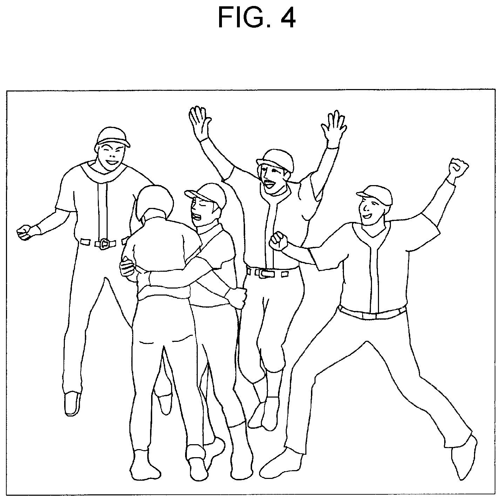

In a case where a photo image such as the one illustrated in Fig. 4 is received from the terminal apparatus 20, the controller 35 identifies each player in the received photo image. For example, the controller 35 identifies each player in the photo image by a method using artificial intelligence (AI). Specifically, the controller 35 performs tagging in which a player in a photo image is identified by using a determination model generated by machine learning using images of various players as training data. The controller 35 may perform tagging by identifying each player in a photo image by using a dedicated face authentication program prepared in advance.

Then, the controller 35 calculates a profit share of each player depending on a position of each identified player in the photo image or a proportion of a player image of each identified player in the photo image.

Information on the profit share thus calculated is transmitted to the terminal apparatus 20 used to upload the photo image.

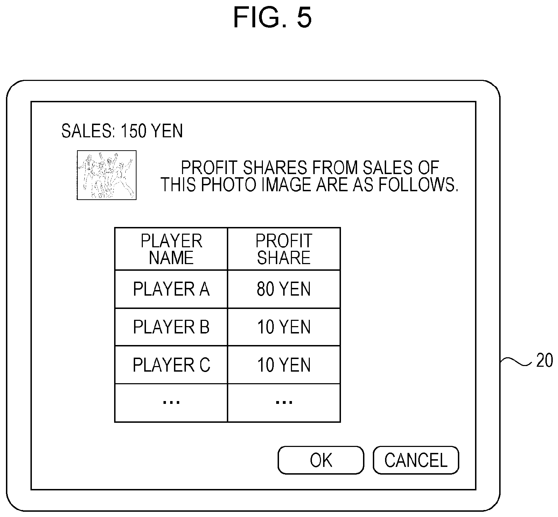

Fig. 5 illustrates an example of a case where information on a profit share transmitted from the profit share calculation server 10 is displayed on a screen of the terminal apparatus 20. In Fig. 5, in a case where a sales amount of a photo image is 150 yen, a profit share of a player A is 80 yen, and a profit share of a player B and a profit share of a player C are 10 yen.

Actually, the sales amount of the photo image is paid once to an organization that hosts an event such as the Nippon Professional Baseball Organization or each baseball team, and the Nippon Professional Baseball Organization or each baseball team decides a payment amount for each player by referring to the calculated profit shares. In this case, a profit share calculated from a sales amount excluding various fees is paid to each player.

In a case where the number of persons included in a single photo image is large, it is sometimes difficult to calculate a profit share of each person. Therefore, in a case where the number of identified persons is larger than a predetermined number, the controller 35 calculates a profit share of an organization related to these persons without calculating a profit share of each person included in the photo image. The predetermined number is settable for each organization related to identified persons. For example, in a case where the number of players in a photo image of a football game is larger than 6, a payment amount for the Japan Football Association is calculated as a profit share from a sales amount of the photo image. In a case where the number of players in a photo image of a baseball game is larger than 10, a payment amount for the Nippon Professional Baseball Organization is calculated as a profit share from a sales amount of the photo image.

In a case where the number of persons in a photo image is more than one and is equal to or less than the predetermined amount, a profit share of each person is calculated in accordance with a rule of an organization related to the identified persons.

As described above, the controller 35 calculates a profit share of each player depending on a position of each identified player in the photo image or a proportion of a player image of each identified player in the photo image. For example, an allocation ratio is set so that a profit share of a person at a center of the photo image is larger than a profit share of a person at an end of the photo image.

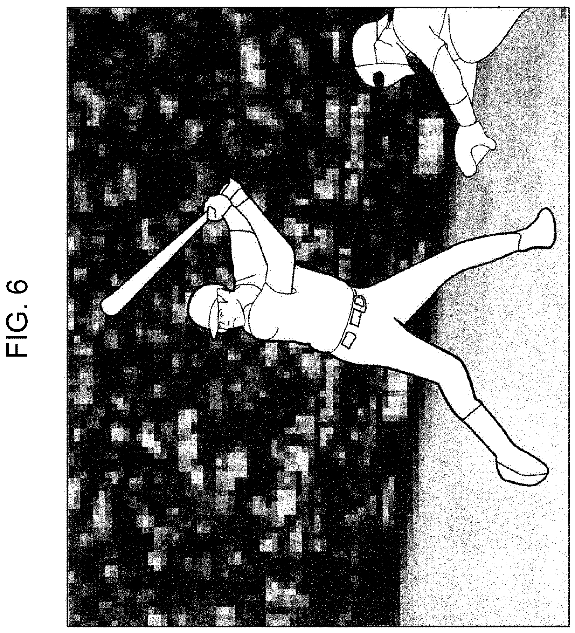

For example, in a case where profit shares of a photo image such as the one illustrated in Fig. 6 are calculated, the controller 35 calculates the profit shares so that an allocation rate of a batter at a center of the photo image is 60% and an allocation rate of a catcher at an end of the photo image is 40%.

Even in the photo image such as the one illustrated in Fig. 6, a person is sometimes present in far background. However, in a case where a person in a photo image is out of focus, blurred, or the like and is not identified, the controller 35 does not allocate a profit share to the photo image. Specifically, the controller 35 does not allocate a profit share to persons, such as backup players at a bench, stadium staff, or spectators, who appear small in far background in a photo image.

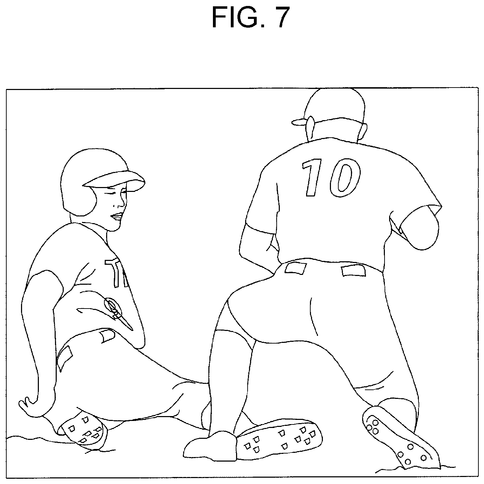

However, in some cases, it is necessary to allocate a profit share to even a person in a photo image who cannot be identified by face authentication or the like. For example, in a case where a player in a photo image is facing the other way in a photo image as illustrated in Fig. 7, it is sometimes impossible to identify the player by face authentication or the like. In such a case, the controller 35 identifies the player by referring to information such as a number, a player name, a team name, or the like on uniform. In the photo image illustrated in Fig. 7, the player may be identified on the basis of a uniform number "10".

Furthermore, in a case where a person in a photo image cannot be identified, the controller 35 acquires, from an outside, event information on an event where the photo image was taken. Then, the controller 35 may identify the person in the photo image on the basis of the acquired event information. For example, the controller 35 may identify a pitcher on the basis of information on pitchers who played in a baseball game or may identify a player on the basis of information on players who played in the game. As for a photo image of a baseball game, it is difficult to identify a catcher by face recognition since the catcher is wearing a mask. In such a case, the catcher may be identified on the basis of information on players who played in the baseball game.

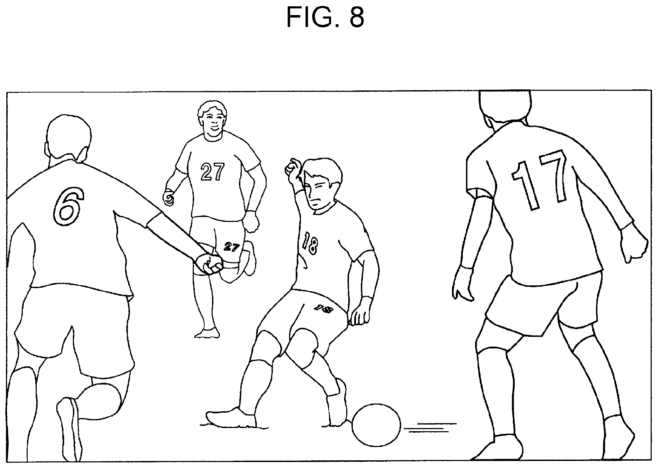

The controller 35 may be configured to set whether or not to allocate a profit share depending on a game situation where a photo image was taken. Specifically, a photo image capturing a moment of a goal in a football game is sold as a photo image featuring a player who scored the goal. However, as is understood from a photo image illustrated in Fig. 8, defense-side players are often captured in such a photo image capturing a moment of a goal. However, the defense-side players are unlikely to feel happy about receiving a profit share of sales of the photo image featuring an opposing team player. Therefore, a right of publicity may be renounced as for a photo image featuring an opposing team player.

In this case, however, it is necessary to specify, from a photo image, a situation featured in the photo image. Therefore, the controller 35 may be configured to acquire, from an outside, event information on an event where the photo image was taken and set, for each person in the photo image, whether or not to allocate a profit share on the basis of the photo image and the event information.

Specifically, which team and who is featured in a photo image may be estimated by comparing a shooting time of the photo image and game progress information. From a result of such estimation, the controller 35 may determine which player in the photo image is allocated a profit share and which player in the photo image is not allocated a profit share.

In the embodiment above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiment above, the term "processor" is broad enough to encompass one processor or plural processors in collaboration which are located physically apart from each other but may work cooperatively. The order of operations of the processor is not limited to one described in the embodiment above, and may be changed.

The "system" in the present exemplary embodiment encompasses both a system including plural apparatuses and a system including a single apparatus.

The present disclosure is also applicable to a program and a program product.

### Modification

Although a case where a profit share is calculated for an image such as a photo image taken in a sport event has been mainly described in the above embodiment, the present disclosure is not limited to this. The technique of the present disclosure is also applicable to a case where a profit share is calculated for an image taken in another event such as a live event, a concert event, a dance event, or a talk show.

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims and their equivalents.

### Appendix

(((1))) An information processing system including: a processor configured to:
   identify a person in an image upon acquisition of the image; and
   calculate a profit share of the identified person upon acquisition of information concerning sales of the image.
(((2))) The information processing system according to (((1))), in which:
   the processor is configured to calculate a profit share of an organization related to the identified person in a case where a number of identified persons is larger than a predetermined number.
(((3))) The information processing system according to (((2))), in which:
   the predetermined number is settable for each organization related to the identified person.
(((4))) The information processing system according to (((2))), in which:
   the processor is configured to calculate a profit share of each identified person in accordance with a rule of the organization related to the person in a case where the number of identified persons is more than one and is equal to or less than the predetermined number.
(((5))) The information processing system according to (((4))), in which:
   the processor is configured to calculate a profit share of each identified person in accordance with a position of the identified person in the image or a proportion of a person image of the identified person in the image.
(((6))) The information processing system according to (((4))), in which:
   the processor is configured not to allocate a profit share to the image in a case where the person in the image is not identified.
(((7))) The information processing system according to any one of (((1))) to (((6))), in which:
   the processor is configured to, in a case where the person in the image is not identified, acquire, from an outside, event information on an event where the image was taken and identify the person in the image on a basis of the acquired event information.
(((8))) The information processing system according to any one of (((1))) to (((7))), in which:
   the processor is configured to acquire, from an outside, event information on an event where the image was taken and set, for each person in the image, whether or not to allocate a profit share on a basis of the image and the event information.
(((9))) A program causing a computer to execute a process including:
   acquiring an image;
   identifying a person in the image;
   acquiring information concerning sales of the image; and
   calculating a profit share of the identified person.

According to the information processing system according to (((1))), the profit share of the person in the image can be calculated without human intervention.

According to the information processing system according to (((2))), the profit share can be calculated in accordance with the rule of the related organization.

According to the information processing system according to (((3))), the profit share can be calculated in accordance with the rule of the related organization.

According to the information processing system according to (((4))), the profit share can be calculated in accordance with the rule of the related organization.

According to the information processing system according to (((5))), a large profit share can be allocated to a person who is believed to have contributed to sales of the image.

According to the information processing system according to (((6))), no profit share is allocated to the image in which the person is not identified.

According to the information processing system according to (((7))), the person in the image can be identified even in a case where the person is not identified by face authentication.

According to the information processing system according to (((8))), setting can be performed in accordance with a situation of the person in the image.

According to the program according to (((9))), the profit share of the person in the image can be calculated without human intervention.

## Claims

1. An information processing system comprising:
a processor configured to:
identify a person in an image upon acquisition of the image; and
calculate a profit share of the identified person upon acquisition of information concerning sales of the image.

2. The information processing system according to claim 1, wherein:
the processor is configured to calculate a profit share of an organization related to the identified person in a case where a number of identified persons is larger than a predetermined number.

3. The information processing system according to claim 2, wherein:
the predetermined number is settable for each organization related to the identified person.

4. The information processing system according to claim 2, wherein:
the processor is configured to calculate a profit share of each identified person in accordance with a rule of the organization related to the person in a case where the number of identified persons is more than one and is equal to or less than the predetermined number.

5. The information processing system according to claim 4, wherein:
the processor is configured to calculate a profit share of each identified person in accordance with a position of the identified person in the image or a proportion of a person image of the identified person in the image.

6. The information processing system according to claim 4, wherein:
the processor is configured not to allocate a profit share to the image in a case where the person in the image is not identified.

7. The information processing system according to any one of claims 1 to 6, wherein:
the processor is configured to, in a case where the person in the image is not identified, acquire, from an outside, event information on an event where the image was taken and identify the person in the image on a basis of the acquired event information.

8. The information processing system according to any one of claims 1 to 7, wherein:
the processor is configured to acquire, from an outside, event information on an event where the image was taken and set, for each person in the image, whether or not to allocate a profit share on a basis of the image and the event information.

9. A program causing a computer to execute a process, the process comprising:
acquiring an image;
identifying a person in the image;
acquiring information concerning sales of the image; and
calculating a profit share of the identified person.

10. An information processing method comprising:
acquiring an image;
identifying a person in the image;
acquiring information concerning sales of the image; and
calculating a profit share of the identified person.
